# EUROPEAN PATENT APPLICATION

(11) **EP 4 691 302 A1**
(43) Date of publication of application: **11.02.2026**
(21) Application number: 24785072.0
(22) Date of filing: 20.03.2024
(51) Int. Cl.: A24F 40/60, A24F 40/46, A24F 40/50, A24F 40/51, A24F 40/40, A24F 40/65, H04R 1/32

(54) **AEROSOL GENERATION DEVICE CAPABLE OF OUTPUTTING SOUND**

(30) Priority: 06.04.2023 KR 20230045450; 08.06.2023 KR 20230073725
(71) Applicant: KT&G Corporation, Daedeok-gu Daejeon 34337 (KR)
(72) Inventor: KWON, Young Bum, Yongin-si, Gyeonggi-do 16930 (KR); KIM, Dong Sung, Seoul 06310 (KR); KIM, Yong Hwan, Anyang-si, Gyeonggi-do 13970 (KR); LIM, Hun Il, Seoul 05555 (KR)
(74) Representative: AWA Sweden AB
(86) International application number: PCT/KR2024/003496
(87) International publication number: WO 2024/210364

(57) **Abstract**

An aerosol generating device comprises a housing forming an external shape of the aerosol generating device and having a sound emission hole, an accommodation portion configured to accommodate a cigarette through a hole formed on one side of the housing, a heater configured to heat the cigarette accommodated in the accommodation portion, a memory storing sound data, a sound output unit configured to output the sound data, and a controller configured to transmit the sound data stored in the memory to the sound output unit.

## Description

### [Technical Field]

Embodiments relate to an aerosol generating device, and more particularly, to an aerosol generating device capable of outputting sound to provide an auditory effect to a user.

### [Background Art]

Recently, the demand for alternative methods for overcoming the shortcomings of general cigarettes has increased. For example, there is an increasing demand for a system for generating aerosols by heating a cigarette or an aerosol generating material by using an aerosol generating device, rather than by burning cigarettes. Accordingly, research on heating-type aerosol generating devices has been actively conducted.

Recently, an attempt to provide various functions to aerosol generating devices has been gradually increased to provide various effects to users.

### [Disclosure]

### [Technical Problem]

Various embodiments may provide an aerosol generating device that may provide an auditory effect to a user.

Embodiments may increase user convenience and safety by providing auditory effects to users in various situations.

The technical problems of the present disclosure are not limited to the above-described description, and other technical problems may be clearly understood by one of ordinary skill in the art from the embodiments to be described hereinafter.

### [Technical Solution]

Additional aspects will be set forth in part in the description which follows and, in part, will be apparent from the description, or may be learned by practice of the presented embodiments of the disclosure.

An aerosol generating device according to an embodiment may include a housing forming an external shape of the aerosol generating device and having a sound emission hole, an accommodation portion configured to accommodate a cigarette through a hole formed on one side of the housing, a heater configured to heat the cigarette accommodated in the accommodation portion, a memory storing sound data, a sound output unit configured to output the sound data, and a controller configured to transmit the sound data stored in the memory to the sound output unit.

### [Advantageous Effects]

According to the aerosol generating device of the embodiments, an auditory effect may be provided to a user.

Also, the aerosol generating device according to the embodiments may increase user convenience and ensure safety by providing an auditory effect to a user in various situations.

### [Description of Drawings]

The above and other aspects, features, and advantages of certain embodiments of the disclosure will be more apparent from the following description taken in conjunction with the accompanying drawings, in which:
FIGS. 1A to 1D schematically illustrate examples in which cigarettes are inserted into aerosol generating devices, according to embodiments;
FIGS. 2A and 2B schematically illustrate cigarettes according to embodiments;
FIG. 3A is a schematic perspective view of an aerosol generating device in which a hole is opened, according to an embodiment;
FIG. 3B is a schematic perspective view of an aerosol generating device in which a hole is closed, according to an embodiment;
FIGS. 4A to 4C are views illustrating a process in which a cover of an aerosol generating device according to another embodiment moves;
FIG. 5 is a block diagram of an aerosol generating device according to an embodiment;
FIG. 6 is a cross-sectional view schematically illustrating an embodiment in which a speaker is provided in an aerosol generating device;
FIGS. 7A and 7B are perspective views schematically illustrating embodiments in which a microphone is provided in an aerosol generating device; and
FIG. 8 is a block diagram of an aerosol generating device according to another embodiment.

### [Mode for Invention]

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

Hereinafter, the present disclosure will now be described more fully with reference to the accompanying drawings, in which exemplary embodiments of the present disclosure are shown such that one of ordinary skill in the art may easily work the present disclosure. However, the present may be implemented in various different forms, and is not limited to the embodiments described herein.

Throughout the specification, "embodiments" are for distinguishment to easily describe the embodiments, and respective embodiments do not need to be mutually exclusive. For example, configurations disclosed in an embodiment may be applied and/or implemented in another embodiment, and may be applied and/or implemented with changes without departing from the scope of the embodiments.

In addition, terms used in the embodiments are for describing the embodiments and are not intended to limit the embodiments.

In the embodiments, a singular form also includes a plural form unless otherwise specified.

Sizes or proportions of some components in the drawings may be somewhat exaggerated. Also, components illustrated in one drawing may not be illustrated in other drawings.

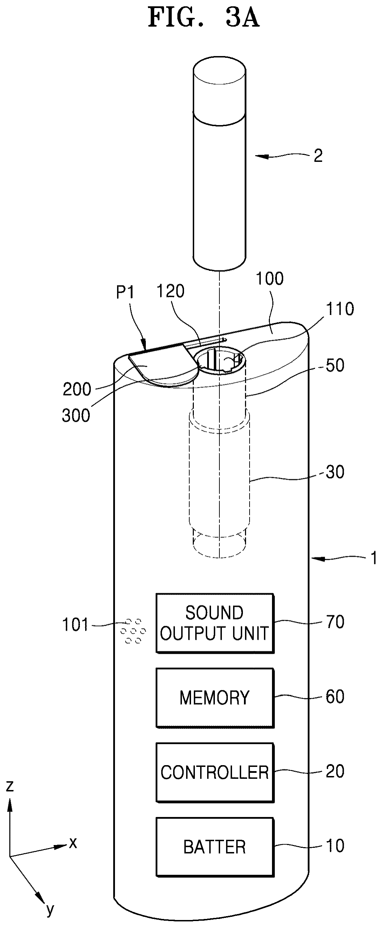

Also, throughout the specification, a "longitudinal direction" of a component may be a direction in which the component extends along one direction axis of the component, where the one direction axis of the component may indicate a direction in which the component extends longer than the other axis crossing the one direction axis. For example, in FIG. 3A, a longitudinal direction of an accommodation portion 50 may indicate a direction (a z direction in FIG. 3A) in which the cylindrical accommodation portion 50 extends, that is, a height direction of a cylinder perpendicular to an axis forming a diameter of the cylinder. Likewise, a longitudinal direction of a cigarette 2 may indicate a direction (a z direction in FIG. 3A) in which the cylindrical cigarette 2 extends. Also, a longitudinal direction of an aerosol generating device 1 may indicate the z direction in FIG. 3A in which the longest side of the aerosol generating device 1 extends.

Hereinafter, embodiments are described in detail with reference to the drawings.

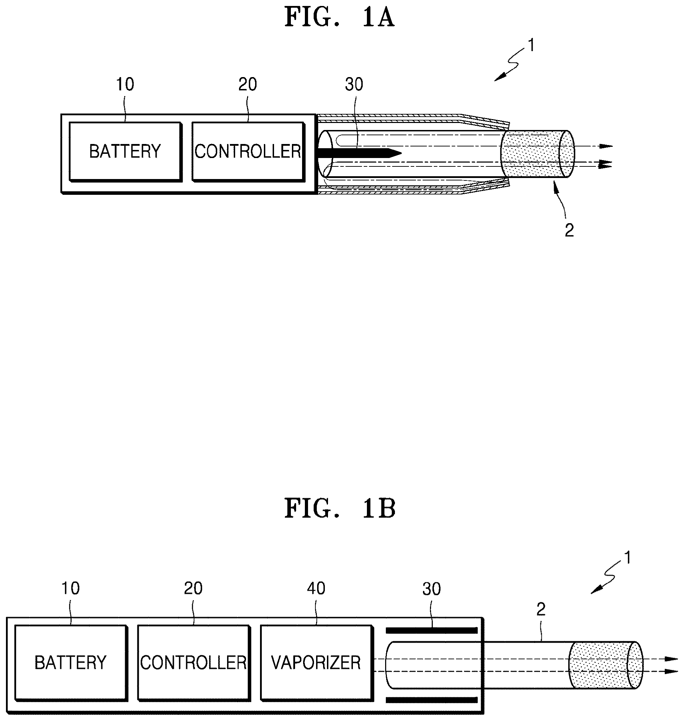

FIGS. 1A to 1D schematically illustrate examples in which cigarettes are inserted into aerosol generating devices, according to embodiments.

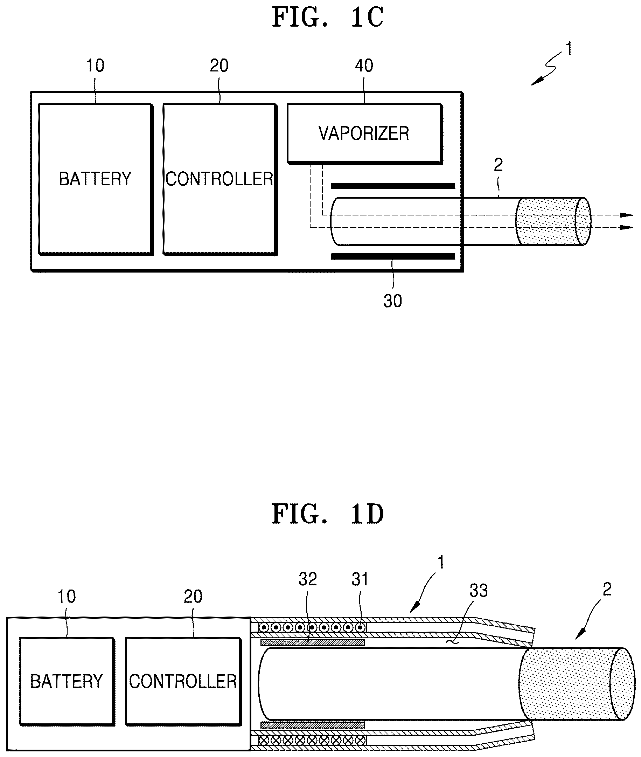

Referring to FIG. 1A, an aerosol generating device 1 includes a battery 10, a controller 20, and a heater 30. Referring to FIGS. 1B and 1C, aerosol generating devices 1 each further include a vaporizer 40. Referring to FIG. 1D, an aerosol generating device 1 includes a battery 10, a controller 20, a coil 31, and a susceptor 32. Also, a cigarette 2 may be inserted into an inner space of the aerosol generating device 1.

The aerosol generating devices 1 illustrated in FIGS. 1A to 1D include components related to the present embodiments. Accordingly, those skilled in the art related to the present embodiment may understand that other general-purpose components including the components illustrated in FIGS. 1A to 1D may be further included in the aerosol generating devices 1.

Also, although FIGS. 1B and 1C illustrate that the aerosol generating devices 1 each include the heater 30, the heater 30 may be omitted as needed.

FIG. 1A illustrates that the battery 10, the controller 20, and heater 30 are arranged in a line. Also, FIG. 1B illustrates that the battery 10, the controller 20, the vaporizer 40, and the heater 30 arranged in a line. Also, FIG. 1C illustrates that the vaporizer 40 and the heater 30 are arranged in parallel to each other. However, internal structures of the aerosol generating devices 1 are not limited to the structures illustrated in FIGS. 1A to 1C. That is, an arrangement of the battery 10, the controller 20, the heater 30, and the vaporizer 40 may be changed depending on designs of the aerosol generating device 1.

When the cigarette 2 is inserted into the aerosol generating device 1, the aerosol generating device 1 operates the heater 30 and/or vaporizer 40, thereby generating an aerosol from the cigarette 2 and/or vaporizer 40. The aerosol generated by the heater 30 and/or vaporizer 40 passes through the cigarette 2 and is transferred to a user.

Even when the cigarette 2 is not inserted into the aerosol generating device 1, the aerosol generating device 1 may heat the heater 30 as needed.

The battery 10 supplies the power used to operate the aerosol generating device 1. For example, the battery 10 may supply power such that the heater 30 or vaporizer 40 may be heated and may supply power required for the controller 20 to operate. Also, the battery 10 may supply power required for a display, sensor, motor, or so on installed in the aerosol generating device 1 to operate.

The controller 20 generally controls an operation of the aerosol generating device 1. Specifically, the controller 20 controls operations of the battery 10, the heater 30, and the vaporizer 40, as well as other components included in the aerosol generating device 1. Also, the controller 20 may check states of respective components of the aerosol generating device 1 and determine whether the aerosol generating device 1 is in an operable state.

The controller 20 includes at least one processor. The processor may also be implemented as an array of multiple logic gates, or as a combination of a general-purpose microprocessor and a memory storing a program that may be executed by the general-purpose microprocessor. Also, those skilled in the art to which the present embodiment belongs may understand that the present embodiment may also be implemented by other types of hardware.

The heater 30 may be heated by the power supplied by the battery 10. For example, when the cigarette 2 is inserted into the aerosol generating device 1, the heater 30 may be outside the cigarette 2. Accordingly, the heated heater 30 may increase the temperature of the aerosol generating material in the cigarette 2.

The heater 30 may include an electrical resistive heater. For example, the heater 30 includes an electroconductive track and may be heated as a current flows through the electroconductive track. However, the heater 30 is not limited to the example described above, and any heater that may be heated to a desired temperature may be used therefor without limitation. Here, the desired temperature may be preset in the aerosol generating device 1 or may be set by a user.

In addition, in another example, an induction heating-type heater including the coil 31 and the susceptor 32 illustrated in FIG. 1D may be used. Therefore, redundant descriptions on the heater are omitted.

Specifically, the aerosol generating device 1 may include an electroconductive coil 31 for heating the cigarette 2 by using an induction heating method and includes the susceptor 32 that may be heated by an induction heating-type heater. Although not illustrated in FIG. 1D, the susceptor 32 may be included in the cigarette 2 without being included in the aerosol generating device 1.

For example, the heater 30 may include a tube-shaped heating element, a plate-shaped heating element, a needle-shaped heating element, or a rod-shaped heating element and may heat the inside or outside of the cigarette 2 according to the shape of the heating element.

Also, a plurality of heaters 30 may be arranged in the aerosol generating device 1. In this case, the plurality of heaters 30 may be arranged inside the cigarette 2 or may be arranged outside the cigarette 2. Also, some of the plurality of heaters 30 may be arranged inside the inside of the cigarette 2 and the others may be arranged outside the cigarette 2. Also, the heater 30 may be formed in various shapes without being limited to the shapes illustrated in FIGS. 1A to 1C.

The vaporizer 40 may generate an aerosol by heating a liquid composition, and the generated aerosol may pass through the cigarette 2 and be transferred to a user. That is, the aerosol generated by the vaporizer 40 may move along an airflow passage of the aerosol generating device 1, and the airflow passage may be formed such that the aerosol generated by the vaporizer 40 may pass through the cigarette 2 and be transferred to a user.

For example, the vaporizer 40 may include a liquid storage reservoir, a liquid delivery member, and a heating element but is not limited thereto. For example, the liquid reservoir, liquid delivery member, and heating element may be included in the aerosol generating device 1 as independent modules.

The liquid reservoir may store a liquid composition. For example, the liquid composition may be a liquid including a tobacco-containing material including volatile tobacco flavor components or may be a liquid including a non-tobacco material. The liquid reservoir may be detachably attached to the vaporizer 40 or may be made integrally with the vaporizer 40.

For example, the liquid composition may include water, a solvent, ethanol, a plant extract, a fragrance, a flavoring agent, or a vitamin mixture. The fragrance may include menthol, peppermint, spearmint oil, and various fruit flavor ingredients but are not limited thereto. The flavoring agent may include ingredients that may provide various flavors or savors to a user. The vitamin mixture may be a mixture of at least one of vitamin A, vitamin B, vitamin C, and vitamin E but is not limited thereto. Also, the liquid composition may include an aerosol former, such as glycerin or propylene glycol.

The liquid delivery member may deliver the liquid composition in the liquid reservoir to the heating element. For example, the liquid delivery member may be a wick, such as cotton fiber, ceramic fiber, glass fiber, or porous ceramic but is not limited thereto.

The heating element heats the liquid composition delivered by the liquid delivery member. For example, the heating element may be a metal heating wire, a metal heating plate, a ceramic heater, or so on but is not limited thereto. Also, the heating element may be composed of a conductive filament, such as a nichrome wire, and may have a structure that is wound around the liquid delivery member. The heating element may be heated by an electric current and may transfer heat to the liquid composition in contact with the heating element to heat the liquid composition. As a result, an aerosol may be generated.

For example, the vaporizer 40 may be referred to as a cartomizer or an atomizer but is not limited thereto.

In addition, the aerosol generating device 1 may further include general-purpose components in addition to the battery 10, the controller 20, the heater 30, and the vaporizer 40. For example, the aerosol generating device 1 may include a display that may output visual information and/or a motor that outputs tactile information. Also, the aerosol generating device 1 may include at least one sensor. Also, the aerosol generating device 1 may have a structure that allows external air to flow in or an internal gas to flow out even when the cigarette 2 is inserted.

Although not illustrated in FIGS. 1A to 1D, the aerosol generating devices 1 may each configure a system with a separate cradle. For example, the separate cradle may be used to charge the battery 10 of the aerosol generating device 1. Also, the heater 30 may be heated in a state where the separate cradle is coupled to the aerosol generating device 1.

In addition, as illustrated in FIG. 1D, an induction heating method using the coil 31 and the susceptor 32 is described in detail.

Referring to FIG. 1D, the aerosol generating device 1 may include the battery 10, the controller 20, the coil 31, the susceptor 32, and a cavity 33.

The cigarette 2 may be inserted into the cavity 33 of the aerosol generating device 1, and the coil 31 may be around the cavity 33. Although FIG. 1D illustrates that the coil 31 surrounds the cavity 33, the present embodiment is not limited thereto.

The aerosol generating device 1 may generate an aerosol by heating the cigarette 2 by using an induction heating method. The induction heating method may refer to a method of generating heat from a magnetic material by applying an alternating magnetic field.

When an alternating magnetic field is applied to a magnetic material, energy loss due to eddy current loss and hysteresis loss may occur in the magnetic material. The energy loss may be emitted from the magnetic material as heat energy. The greater the amplitude or frequency of the alternating magnetic field, the more heat energy may be emitted from the magnetic material. The magnetic material that generates heat due to an external magnetic field may be a susceptor.

The aerosol generating device 1 may include the susceptor 32 that generates heat due to an external magnetic field. The aerosol generating device 1 may heat the cigarette 2 by applying an alternating magnetic field to the susceptor 32.

The susceptor 32 may include metal or carbon. The susceptor 32 may include at least one of ferrite, a ferromagnetic alloy, stainless steel, and aluminum (Al).

Also, the susceptor 32 may include at least one of graphite, molybdenum, silicon carbide, niobium, a nickel alloy, a metal film, ceramic such as zirconium, a transition metal such as nickel (Ni) or cobalt (Co), and metalloid such as boron (B) or phosphorus (P).

The aerosol generating device 1 may include the cavity 33 for accommodating the cigarette 2. The cavity 33 may include an opening that is opened outside the cavity 33 to accommodate the cigarette 2 in the aerosol generating device 1.

The aerosol generating device 1 may include the coil 31 that applies an alternating magnetic field to the susceptor 32. The coil 31 may be wound along a side of the cavity 33. The coil 31 may be near the susceptor 32.

The coil 31 may receive power from the battery 10. As power is supplied to the coil 31, a magnetic field may be formed inside the coil 31. When an alternating current is applied to the coil 31, the magnetic field formed inside the coil 31 may periodically change in direction. When the susceptor 32 is exposed to the alternating magnetic field formed by the coil 31, the susceptor 32 generates heat, and thereby, the cigarette 2 accommodated in the aerosol generating device 1 is heated.

As the amplitude or frequency of the alternating magnetic field formed by the coil 31 changes, the temperature of the susceptor 32 that heats the cigarette 2 may change. The controller 20 may control the power supplied to the coil 31 such that the amplitude or frequency of the alternating magnetic field formed by the coil 31 may be adjusted, and accordingly, the temperature of the susceptor 32 may be controlled.

For example, the coil 31 may be made as a solenoid. The coil 31 may be a solenoid wound along a side of the cavity 33. The cigarette 2 may be accommodated in an inner space of the solenoid. The solenoid may include copper (Cu) but is not limited thereto.

In order to allow a high current to flow by having low resistivity, the solenoid may include an alloy including any one or at least one of silver (Ag), gold (Au), aluminum (Al), tungsten (W), zinc (Zn), and nickel (Ni).

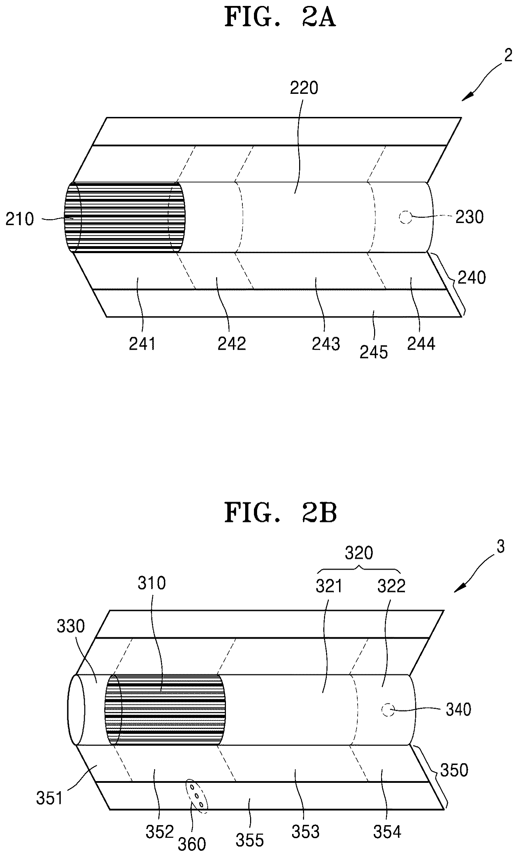

FIGS. 2A and 2B schematically illustrate cigarettes according to embodiments.

Referring to FIG. 2A, the cigarette 2 includes a tobacco rod 210 and a filter rod 220. Although FIG. 2A illustrates that the filter rod 220 is a single segment, the embodiments are not limited thereto. That is, the filter rod 220 may be composed of a plurality of segments.

For example, the filter rod 220 may include a first segment that cools an aerosol and a second segment that filters a certain ingredient included in the aerosol. Also, the filter rod 220 may further include at least one segment that performs another function as needed.

The cigarette 2 may be wrapped by at least one wrapper 240. At least one perforation, through which external air flows in or an internal gas flows out, may be formed in the wrapper 240. For example, the cigarette 2 may be wrapped by one wrapper 240. In another example, the cigarette 2 may be overlappingly wrapped by two or more wrappers 240. For example, the tobacco rod 210 may be wrapped by a first wrapper 241 and the filter rod 220 may be wrapped by wrappers 242, 243, and 244. In addition, the cigarette 2 may be entirely rewrapped by the single wrapper 245. When the filter rod 220 is composed of a plurality of segments, the plurality of segments may be respectively wrapped by the wrappers 242, 243, and 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol but is not limited thereto. The tobacco rod 210 may also include other additives, such as a savoring agent, a wetting agent, and/or organic acid. Also, a flavoring liquid, such as menthol or a moisturizer, may be added to the tobacco rod 210 by spraying the flavoring liquid onto the tobacco rod 210.

The tobacco rod 210 may be made in various ways. For example, the tobacco rod 210 may be made as a sheet or as a strand. Also, the tobacco rod 210 may be made of a cut tobacco that is cut into small pieces. Also, the tobacco rod 210 may be surrounded by a heat-conductive material. For example, the heat-conductive material may be metal foil, such as aluminum foil, but is not limited thereto. For example, the heat-conductive material surrounding the tobacco rod 210 may uniformly disperse the heat transferred to the tobacco rod 210, and thus, the heat conductivity applied to the tobacco rod 210 may be increased, and the taste of a tobacco may be improved. Also, the heat-conductive material surrounding the tobacco rod 210 may function as a susceptor heated by an induction heater. In this case, although not illustrated in the drawings, the tobacco rod 210 may further include an additional susceptor in addition to the heat-conductive material surrounding the outside of the tobacco rod 210.

The filter rod 220 may be a cellulose acetate filter. In addition, a shape of the filter rod 220 is not limited. For example, the filter rod 220 may be a cylindrical rod or a tube-type rod having a cavity therein. Also, the filter rod 220 may be a recess-type rod. When the filter rod 220 is composed of a plurality of segments, at least one of the plurality of segments may be made in a different shape.

The filter rod 220 may be made to generate flavor. For, a flavoring liquid may be sprayed onto the filter rod 220, or separate fiber coated with a flavoring liquid may be inserted into the filter rod 220.

Also, the filter rod 220 may include a capsule 230 which may include a plurality of capsules. Here, the capsule 230 may generate flavor or an aerosol. For example, the capsule 230 may have a structure in which a liquid including fragrance is wrapped by a film. The capsule 230 may have a spherical or cylindrical shape but is not limited thereto.

Referring to FIG. 2B, a cigarette 3 may further include a front-end plug 330. The front-end plug 330 may be on one side of the tobacco rod 310 which is an opposite side of the filter rod 320. The front-end plug 330 may prevent the cigarette rod 310 from separating from the cigarette 3 and prevent a liquefied aerosol from flowing into an aerosol generating device from the cigarette rod 310 during smoking.

The filter rod 320 may include a first segment 321 and a second segment 322. Here, the first segment 321 may correspond to the first segment of the filter rod 220 in FIG. 2A, and the second segment 322 may correspond to the second segment of the filter rod 220 in FIG. 2A.

A diameter and entire length of the cigarette 3 may correspond to the diameter and entire length of the cigarette 2 in FIG. 2A. For example, a length of the front-end plug 330 may be about 7 mm, a length of the tobacco rod 310 may be about 15 mm, a length of the first segment 321 may be about 12 mm, and a length of the second segment 322 may be about 14 mm but are not limited thereto.

The cigarette 3 may be wrapped by a wrapper 350 which may include a plurality of wrappers. At least one perforation, through which external air flows in or an internal gas flows out, may be formed in the wrapper 350. For example, the front-end plug 330 may be wrapped by a first wrapper 351, the tobacco rod 310 may be wrapped by a second wrapper 352, and the first segment 321 may be wrapped by a third wrapper 353, and the second segment 322 may be wrapped by a fourth wrapper 354. In addition, the cigarette 3 may be entirely rewrapped by a fifth wrapper 355.

Also, a perforation 360, which may include a plurality of perforations, may be formed in the fifth wrapper 355. For example, the perforation 360 may be formed in a region surrounding the tobacco rod 310 but is not limited thereto. The perforation 360 may transfer the heat generated by the heater 30 illustrated in FIGS. 1B and 1C to the inside of the tobacco rod 310.

Also, the second segment 322 may include a capsule 340 which may include a plurality of capsules. Here, the capsule 340 may perform a function of generating flavor or an aerosol. For example, the capsule 340 may have a structure in which a liquid including fragrance is wrapped by a film. The capsule 340 may have a spherical or cylindrical shape but is not limited thereto.

FIG. 3a is a schematic perspective view of an aerosol generating device in which a hole is opened, according to an embodiment.

Referring to FIG. 3A, an aerosol generating device 1 according to an embodiment may include a housing 100 forming an external shape of the aerosol generating device 1 and an accommodation portion 50 that accommodates a cigarette 2 through a hole 110 formed on one side of the housing 100. Also, the aerosol generating device 1 may include a battery 10, a controller 20, a heater 30, a memory 60 that stores sound data, and a sound output unit 70.

The controller 20 may control all operations of the aerosol generating device 1. In the aerosol generating device 1 according to an embodiment, the controller 20 may transmit the sound data stored in the memory 60 to the sound output unit 70.

The aerosol generating device 1 according to an embodiment may include the accommodation portion 50 that accommodates the cigarette 2, and the accommodation portion 50 is exposed to the outside of the aerosol generating device 1 through the hole 110. The hole 110 has an inner space that may sufficiently accommodate the cigarette 2 and may have a shape corresponding to a longitudinal cross-section of the cigarette 2.

The heater 30 may surround at least a part of the outside of the accommodation portion 50. For example, the accommodation portion 50 may have a cylindrical shape similar to an outer shape of the cigarette 2.

In another example, the heater 30 may be an induction heating-type heating member that includes a cylindrical susceptor surrounding at least a part of the accommodation portion 50 and a coil surrounding the susceptor. Also, the heater 30 may protrude in the accommodation portion 50 to be inserted into the inside of the cigarette 2.

The accommodation portion 50 may have a cylindrical shape having an inner space for accommodating at least a part of the cigarette 2. The accommodation portion 50 may include a hole 110 that is opened on the outside of the accommodation space to accommodate the cigarette 2 in the aerosol generating device 1. The hole 110 may be open toward the outside of the aerosol generating device 1. The cigarette 2 may be accommodated in the accommodation space from the outside of the accommodation portion 50 toward the inside of the accommodation portion 50 through the hole 110.

The aerosol generating device 1 according to an embodiment may include the memory 60 that stores sound data. The memory 60 may store sound data related to an alarms or a single sound with a small capacity in an uncompressed form and may store sound data with a relatively large capacity in a compressed form.

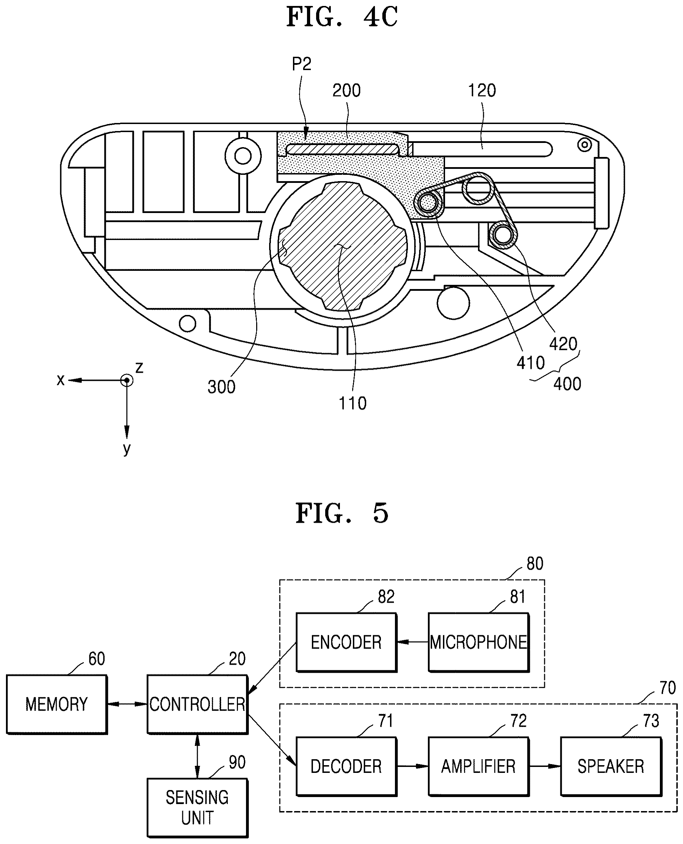

The aerosol generating device 1 according to an embodiment may include the sound output unit 70 that outputs the sound data stored in the memory 60. The sound output unit 70 may include an amplifier 72 (illustrated in FIG. 5) that amplifies a signal of the sound data and a speaker 73 (illustrated in FIG. 5) that outputs an amplified signal. The speaker may be a micro speaker. Also, as described below with reference to FIG. 5, the aerosol generating device 1 may further include a decoder 71 to output sound data with a large capacity.

The sound output unit 70 may be at a position where the influence of heat generated by the heater 30 may be minimized. The sound output unit 70 may be between the housing 100 and the heater 30 of the aerosol generating device 1.

Also, when heated by an induction heating method, the sound output unit 70 may be placed at a certain distance from the coil 31 of FIG. 1D to reduce the influence of a magnetic field applied during heating. Also, a shield tape or so on may be provided between the coil 31 of FIG. 1D and the sound output unit 70 to shield the influence of a magnetic field.

Also, the housing 100 of the aerosol generating device 1 according to an embodiment may include a sound emission hole 101 that may emit the sound output from the sound output unit 70 to the outside of the aerosol generating device 1. The sound emission hole 101 may be one or more small holes formed in the housing 100 and may allow the sound output from the sound output unit 70 to be easily emitted to the outside of the aerosol generating device 1.

The sound emission hole 101 may be formed at a position corresponding to a position of the sound output unit 70. Specifically, the sound emission hole 101 may be formed at a position corresponding to a position of the speaker 73 (illustrated in FIG. 5) of the sound output unit 70. Accordingly, the sound output from the speaker 73 (illustrated in FIG. 5) may be emitted to the outside of the aerosol generating device 1 through the sound emission hole 101 of the aerosol generating device 1, thereby providing an auditory effect to a user.

The aerosol generating device 1 according to an embodiment may further include a cover 200 that opens and closes the hole 110. The cover 200 may open or close the hole 110 in various shapes. When the cover 200 covers and closes the hole 110, at least a part of the housing 100 may be covered. The cover 200 may be fixed to one side of the housing 100 or may be detachably coupled to the housing 100. For example, the cover 200 is a separate member that covers at least a part of the aerosol generating device 1 and the hole 110 and may be detachably coupled to one side of the housing 100.

Referring to FIG. 3A, in another example, the cover 200 may be movably coupled to one side of the housing 100 to open or close the hole 110 as the cover 200 moves.

Referring to FIG. 3A, the housing 100 may further include a guide 120 that guides the movement of the cover 200. The cover 200 may be movably coupled to the guide 120 to slide along a path of the guide 120.

A combination of the cover 200 and the guide 120 may be implemented in various forms. For example, the guide 120 may be provided on one side of the housing 100 in the form of a concave groove, and the cover 200 may have a protrusion that may slide while being inserted into the groove of the guide 120. In another example, the guide 120 may be provided in the form of a protruding protrusion on one side of the housing 100, and the cover 200 may include a groove inserted into the protrusion. However, the guide 120 is not limited thereto. Also, the guide 120 and the housing 100 may be made integrally or may be made separately and then combined with each other.

Although drawings illustrate that the guide 120 is a straight line, the embodiments are not limited thereto. At least a part of the guide 120 may be curved, and in this case, the cover 200 may move along a curved path of the guide 120.

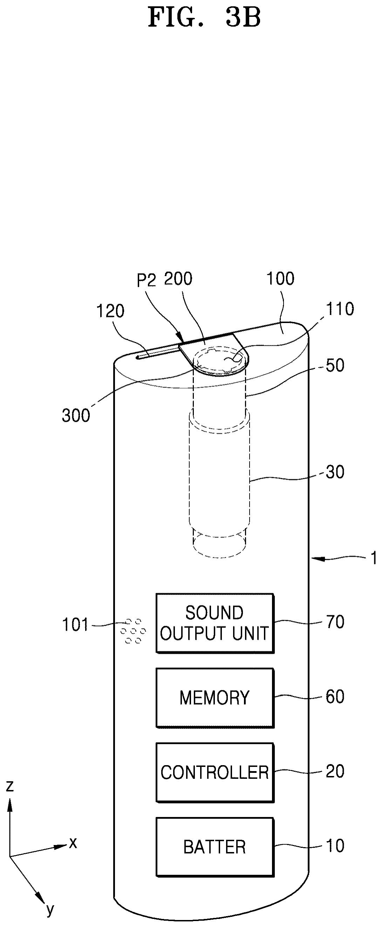

The cover 200 may open the hole 110 at a first position P1 and close the hole 110 at a second position P2 (illustrated in FIG. 3B). When the cover 200 is at the first position P1, the hole 110 is opened such that the cigarette 2 may be inserted thereinto. In order to use the aerosol generating device 1, a user may move the cover 200 to the first position P1 to open the hole 110 to expose the accommodation portion 50 to the outside of the aerosol generating device 1. The user may insert the cigarette 2 into the accommodation portion 50 through the open hole 110.

More specifically, the cover 200 may move between the first position P1 at which the hole 110 of the accommodation portion 50 is opened and the second position P2 (illustrated in FIG. 3B) at which the hole 110 is closed. When the cover 200 is at the first position P1, the hole 110 may be entirely opened, and when the cover 200 is at the second position P2 (illustrated in FIG. 3B), the hole 110 may be entirely closed.

The position of the cover 200 may be adjusted as a user pushes the cover 200 with a finger. Also, the aerosol generating device 1 may include a separate drive device that may adjust the position of the cover 200 along the guide 120. The aerosol generating device 1 according to an embodiment may further include a holding member (not illustrated) that maintains the cover 200 at the first position P1 or the second position P2. The holding member may maintain the hole 110 in an open state or in a covered state by fixing the cover 200 to the first position P1 or the second position P2. For example, the holding member may be a permanent magnet that fixes the position of the cover 200 by a magnetic force or may have a structure fixed by a fitting method but is not limited thereto.

A size of the cover 200 may be greater than a cross-section of the hole 110. The cover 200 may have a shape corresponding to a shape of the hole 110. For example, when the hole 110 has a circular shape, at least a part of the cover 200 may include an arc having a diameter greater than a diameter of the hole 110.

In addition, the aerosol generating device 1 according to an embodiment may further include an air inlet 300. The air inlet 300 may refer to a space through which air may flow between the accommodation portion 50 and the cigarette 2 when the cigarette 2 is inserted into the accommodation portion 50. The air inlet 300 may be connected to an airflow passage that is a path through which air moves inside the aerosol generating device 1. That is, external air may flow into the aerosol generating device 1 through the air inlet 300, move to the accommodation portion 50, pass through the inside of the cigarette 2 to be mixed with an aerosol, and be transferred to a user.

FIG. 3B is a schematic perspective view of an aerosol generating device in which a hole is closed, according to an embodiment.

Referring to FIG. 3B, when the aerosol generating device 1 is not used, a user may close the hole 110 by moving the cover 200 to the second position P2. When the cover 200 is moved to the second position P2 and the hole 110 is closed, the accommodation portion 50 is sealed, and accordingly, the accommodation portion 50 is blocked from the outside of the aerosol generating device 1. As the cover 200 closes the hole 110, foreign materials may be prevented from flowing into the accommodation portion 50.

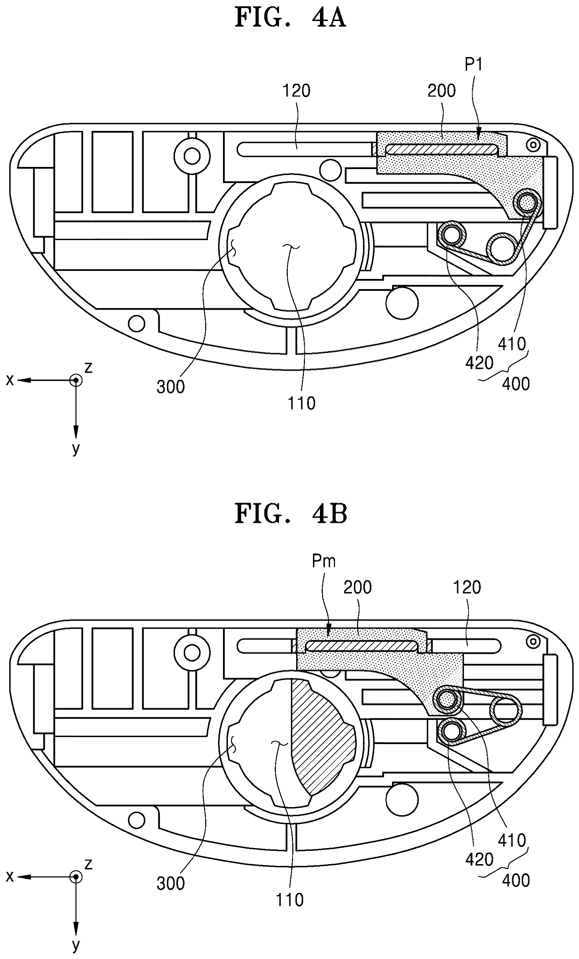

FIGS. 4A to 4C are views illustrating a process in which a cover of an aerosol generating device according to another embodiment moves.

An aerosol generating device 1 according to another embodiment may further include an elastic member 400 that guides the movement of a cover 200. The elastic member 400 may guide the movement of the cover 200 by an elastic force. The elastic member 400 may be a spring. For example, the spring may be a spiral spring or a torsion spring.

In another example, the elastic member 400 may be an elastic material, which is compressible and elastic, such as, sponge or rubber.

In another example, the elastic member 400 may include a magnet that provides an elastic force by a magnetic force, or an air cylinder that provides an elastic force caused by compressed air.

A first side 410 of the elastic member 400 may be rotatably connected to the cover 200, and a second side 420 may be rotatably connected to the housing 100. The first side 410 and the second side 420 of the elastic member 400 may be at least partially curved and rotatably connected respectively to the cover 200 and the housing 100.

Referring to FIGS. 4A to 4C, the elastic member 400 may each be a torsion spring. A portion that is wound in a circular manner at least once may be between the first side 410 and the second side 420 of the elastic member 400.

The elastic member 400 may guide the movement of the cover 200 while the elastic member 400 changes in shape due to the movement of the cover 200 on one side of the housing 100 and then restores the shape by an elastic force.

FIG. 4A is a view illustrating one side of the housing 100 when the cover 200 is at the first position P1. When the cover 200 is at the first position P1, the hole 110 of the aerosol generating device 1 may be opened.

When the cover 200 is at the first position P1, the elastic member 400 does not receive an external force, thereby maintaining a basic shape without being compressed or expanded. Accordingly, when the cover 200 is at the first position P1, the elastic member 400 does not provide an elastic force to the cover 200.

Also, when the cover 200 is closer to the first position P1 than to the second position P2, the elastic member 400 may deflect the cover 200 toward the first position P1. Specifically, when the cover 200 moves from the first position P1 to an intermediate position Pm between the first position P1 and the second position P2, the elastic member 400 may be compressed. Also, when the cover 200 moves from the intermediate position Pm to the first position P1, the elastic member 400 may be relaxed. Accordingly, when the cover 200 moves from the intermediate position Pm to the first position P1, the elastic member 400 is relaxed and may be deflected to the first position P1.

Through the elastic member 400 described above, a user may open the hole 110 by moving the cover 200 with a small force. Also, when an external force that may move the cover 200 to the intermediate position Pm (illustrated in FIG. 4B) is not applied, the cover 200 is maintained at the first position P1, and thus, the cover 200 may be prevented from moving unintentionally.

FIG. 4B is a view illustrating one side of the housing 100 when the cover 200 is at the intermediate position Pm which is a midpoint between the first position P1 and the second position P2.

When a user moves the cover 200 from the first position P1 to the second position P2 or from the second position P2 to the first position P1, the first side 410 of the elastic member 400 connected to the housing 100 may be moved with the cover 200, and accordingly, the elastic member 400 may be compressed.

When the elastic member 400 is compressed by an external force applied to the cover 200, elastic energy for restoring a basic shape may be accumulated in the elastic member 400. The basic shape of the elastic member 400 may indicate a shape in which the elastic member 400 is not compressed or expanded.

Before passing through a critical position in which an external force applied by a user is equal to an elastic force of the elastic member 400 and which is between the first position P1 and the second position P2, the elastic member 400 may be compressed by the external force and accumulate elastic energy. When the cover 200 does not move beyond the critical position, the cover 200 may return to an original position by the elastic force of the elastic member 400. The critical position may be the intermediate position Pm illustrated in FIG. 4B.

FIG. 4C is a view illustrating one side of the housing 100 when the cover 200 is at the second position P2. When the cover 200 is at the second position P2, the hole 110 of the aerosol generating device 1 may be closed.

When the cover 200 is at the second position P2, the elastic member 400 does not receive an external force, and accordingly, the elastic member 400 may maintain a basic shape without being compressed or expanded. Accordingly, when the cover 200 is at the second position P2, the elastic member 400 does not provide an elastic force to the cover 200.

Also, when the cover 200 is closer to the second position P2 than to the first position P1, the elastic member 400 may deflect the cover 200 toward the second position P2. Specifically, when the cover 200 moves from the second position P2 to the intermediate position Pm between the second position P2 and the first position P1, the elastic member 400 may be compressed. Also, when the cover 200 moves from the intermediate position Pm to the second position P2, the elastic member 400 may be relaxed. Therefore, when the cover 200 moves from the intermediate position Pm to the second position P2, the elastic member 400 may be relaxed to be deflected to the second position P2.

Through the elastic member 400 described above, a user may close the hole 110 by moving the cover 200 with a small force. Also, when an external force that may move the cover 200 to the intermediate position Pm (illustrated in FIG. 4B) is not applied, the cover 200 is maintained in the second position P2, and thus, the cover 200 may be prevented from being opened unintentionally.

FIG. 5 is a block diagram of an aerosol generating device according to an embodiment.

An aerosol generating device 1 may include a controller 20, a memory 60, and a sound output unit 70. The aerosol generating device 1 may further include a sound input unit 80. Also, the aerosol generating device 1 may include a sensing unit 90 that detects an operation of the aerosol generating device 1.

The controller 20 may control all operations of the memory 60, the sound output unit 70, the sound input unit 80, and the sensing unit 90. An operation of transmitting a signal to the sound output unit 70, an operation of receiving a signal from the sound input unit 80, and an operation of storing sound data in the memory 60 or outputting the sound data stored in the memory 60 according to a determination result of the controller 20. Also, the controller 20 may control the operation of the aerosol generating device 1 according to a detection result of the sensing unit 90.

Also, although not illustrated in FIG. 5, the controller 20 may control operations of a communication unit that may communicate with other electronic devices, a user input unit that may receive information from a user, and so on. The communication unit may be a communication module for a short-distance communication, wireless communication, or so on. As described above, the controller 20 may also control operations of a heater and a battery.

The memory 60 may store at least one of various types of sound data. For example, the memory 60 may store the sound data in the form of an uncompressed wav file or a compressed mp3 file but is not limited thereto.

The aerosol generating device 1 includes the sound output unit 70 that outputs the sound data stored in the memory 60 to the outside of the aerosol generating device 1. The sound output unit 70 may include an amplifier 72 that amplifies a signal of the sound data stored in the memory 60 and a speaker 73 that outputs an amplified signal. Specifically, the memory 60 may store sound data on a small-capacity alarm or a single sound in an uncompressed form, and the sound data may be output through the amplifier 72 and speaker 73 without separate conversion. The aerosol generating device 1 according to the embodiment may output a sound with a simple configuration.

Also, the memory 60 may store relatively large-capacity sound data in a compressed form, and the sound output unit 70 may further include a decoder 71 that decodes and outputs the compressed sound data. Specifically, digital sound data stored in the memory 60 as a compressed form may be converted into an analog signal by the decoder 71, and the converted signal may be amplified by the amplifier 72 and output to the speaker 73.

In addition, although not illustrated in the drawings, the aerosol generating device 1 may output not only sound data previously stored in the memory 60 but also sound data that is not stored. For example, external sound data provided through a communication module for short-distance communication or wireless communication may be received and output to the sound output unit 70. As described above, the external sound data may be received through the controller 20. The sound data transmitted through communication or so on may be decoded by the decoder 71 and played back in a streaming manner through the speaker 73.

Also, the aerosol generating device 1 according to an embodiment may further include the sound input unit 80 that receives an external sound. That is, the aerosol generating device 1 may have a recording function. The sound input unit 80 may include a microphone 81 and an encoder 82 that encodes the sound input through the microphone 81. Specifically, an analog signal input from the microphone 81 may be converted into a digital signal through the encoder 82 and stored in the memory 60.

A user may select sound data input through the encoder 82 and stored in the memory 60 and set the sound data to be played back in a certain mode. A user may change and set the sound data for each mode pre-stored in the memory 60 to a recorded sound.

Also, in addition to the sound data for each set mode, other sound data may be stored in the memory 60. A user may selectively change and set the sound data stored in the memory 60 to be played back in a desired mode.

As is described below, an "open mode" and "closed mode" which are sound data on whether the hole 110 is opened or closed, an "on mode" and "off mode" which are sound data on power-on/off of the aerosol generating device 1, a "cigarette accommodation mode" and "cigarette separation mode" which are sound data on whether the cigarette 2 is accommodated in or separated from the accommodation portion 50, and a "preheating start mode" and "preheating completion mode" which are sound data on whether the preheating of the heater 30 is started or completed may be changed and set to sound data different from the preset sound data.

In order for a user to make the setting, a keypad, a dome switch, a touch pad, a jog wheel, a jog switch, and so on may be provided.

The controller 20 may control the sound data stored in the memory 60 to be output through the sound output unit 70 based on a result detected by the sensing unit 90. The sensing unit 90 may include at least one of a first sensor, a second sensor, a third sensor, a fourth sensor, and a fifth sensor but is not limited thereto.

The first sensor may detect whether the cover 200 of the aerosol generating device 1 opens or closes the hole 110. The first sensor may detect the movement of the cover 200 and may also detect the movement of the elastic member 400 that guides the movement of the cover 200. For example, a change in a mounting space or so on due to compression and relaxation of the elastic member 400 may be detected. However, the embodiments are not limited thereto, and the first sensor may be any suitable sensor for detecting whether the hole 110 is opened or closed.

When the cover 200 is closer to the first position P1 than to the second position P2, the first sensor may detect that the hole 110 is opened. Also, when the cover 200 is closer to the second position P2 than to the first position P1, the first sensor may detect that the hole 110 is closed.

The controller 20 may determine whether the hole 110 is opened or closed based on the result detected by the first sensor and select the sound data stored in the memory 60 according to a determination result and transmit the selected sound data to the sound output unit 70. That is, the controller 20 may select the sound data of an "open mode" or "closed mode" stored in the memory 60 according to the result detected by the first sensor and output the selected sound data to the sound output unit 70.

When the hole 110 is detected to be open by the first sensor, the controller 20 may select the sound data stored in the memory 60 as an "open mode" and transmit the selected sound data to the sound output unit 70. In contrast to this, when the hole 110 is detected to be closed by the first sensor, the controller 20 ma select the sound data stored in the memory 60 as a "closed mode" and transmit the selected sound data to the sound output unit 70.

Also, the first sensor may detect an amplitude, frequency, waveform, and so on of a sound wave generated by the elastic member 400 as the cover 200 opens or closes the hole 110. The controller 20 may determine whether the previously stored sound wave data on the elastic member 400 matches the sound wave data, such as the amplitude, frequency, waveform, and so on detected by the first sensor, and accordingly, it is possible to detect whether the hole 110 is opened or closed. The first sensor may include the microphone 81 for recognizing a sound wave generated by the elastic member 400.

The memory 60 may store the sound wave data generated by the elastic member 400 while the cover 200 opens and closes the hole 110. The sound wave data is data on an amplitude, frequency, waveform, and so on of the sound wave generated by the elastic member 400 according to the movement of the cover 200 and may change depending on the type of the elastic member 400, a form in which the elastic member 400 is connected to the cover 200 and the housing 100, and the degree that the elastic member 400 is compressed or released.

The controller 20 may determine whether the sound wave data of the elastic member 400 stored in the memory 60 matches the data detected by the first sensor. The controller 20 may detect whether the hole 110 is opened or closed by determining whether the data matches each other. When one or more of the amplitude, frequency, and waveform of the sound wave of the elastic member 400 detected by the first sensor matches the sound wave data of the elastic member 400 stored in the memory 60, the controller 20 may determine to be matched.

The second sensor may detect whether the power of the aerosol generating device 1 is turned on or off. The second sensor may detect the power-on/off by detecting a voltage of the battery 10. The second sensor may be any suitable sensor for detecting whether power is supplied to the aerosol generating device 1 from the battery 10 without being limited thereto.

Also, the aerosol generating device 1 may include a separate switch to turn the power on or off. The second sensor may detect an operation of the separate switch.

In addition, a single sensor may detect both power-on/off of the aerosol generating device 1 and opening and closing of the hole 110. For example, by generating an off-signal when the hole 110 is closed, closing of the hole 110 and power-off may be simultaneously detected. Also, by generating an on-signal when the hole 110 is opened, opening of the hole 110 and power-on may be simultaneously detected.

The controller 20 may determine whether the aerosol generating device 1 is power on or off based on the signal detected by the second sensor and may select the sound data stored in the memory 60 according to the determined result and transmit the selected sound data to the sound output unit 70. That is, the controller 20 may select the sound data of an "on mode" or an "off mode" stored in the memory 60 according to the result detected by the second sensor and transmit the selected sound data to the sound output unit 70.

When the second sensor detects that the power is turned on (ON), the controller 20 may select the sound data stored in the memory 60 as the "on mode" and transmit the selected sound data to the sound output unit 70. In contrast to this, when the second sensor detects that the power is turned off (OFF), the controller 20 may select the sound data stored in the memory 60 as the "off mode" and transmit the selected sound data to the sound output unit 70.

The third sensor may detect whether the cigarette 2 is accommodated in the accommodation portion 50 of the aerosol generating device 1. Because the cigarette 2 may be inserted through the hole 110 of the aerosol generating device 1 and accommodated in the accommodation portion 50, the third sensor may be any suitable sensor for detecting whether the cigarette 2 is inserted into the hole 110.

Also, when the cigarette 2 is inserted through the hole 110 and deeply inserted into the accommodation portion 50 to a preset position, the third sensor may detect that the cigarette 2 is accommodated. The cigarette 2 may be inserted in a z-axis direction in FIG. 3A, and the preset position may be a preset position on a z axis. When the cigarette 2 is not deeply inserted into the preset position, the cigarette 2 may be recognized as being separated.

For example, the third sensor may include at least one of a hole sensor that detects a change in magnetic field generated by a metal material included in the cigarette 2, a mechanical sensor that detects a physical change occurring as the cigarette 2 is inserted, an infrared sensor that detects the approach of the cigarette 2, and an optical sensor that detects a pattern printed on a surface of the cigarette 2. However, the third sensor is not limited to the previous example.

The controller 20 may determine whether the cigarette 2 is accommodated in or separated from the accommodation portion 50 of the aerosol generating device 1 based on a signal detected by the third sensor, select the sound data stored in the memory 60 according to the determined result, and transmit the selected sound data to the sound output unit 70. That is, the controller 20 may select the sound data of a "cigarette accommodation mode" or a "cigarette separation mode" stored in the memory 60 according to a result detected by the third sensor and output the selected sound data to the sound output unit 70.

When the third sensor detects that the cigarette 2 is accommodated in the accommodation portion 50, the controller 20 may select the sound data stored in the memory 60 as the "cigarette accommodation mode" and output the selected sound data to the sound output unit 70. In contrast to this, when the third sensor detects that the cigarette 2 is separated from the accommodation portion 50, the controller 20 may select the sound data stored in the memory 60 as the "cigarette separation mode" and transmit the selected sound data to the sound output unit 70.

The fourth sensor may be a temperature sensor that detects a temperature of the heater 30 or a temperature at which the cigarette 2 is heated. For example, the fourth sensor may include a thermocouple (TC), a resistance temperature detector (RTD), or a thermistor but is not limited thereto.

The controller 20 may determine whether preheating of the heater 30 is started or whether preheating to a preset temperature is completed, based on the temperature detected by the fourth sensor, select the sound data stored in the memory 60 according to the determined result, and transmit the selected sound data to the sound output unit 70. That is, the controller 20 may select the sound data of a "preheating start mode" or a "preheating completion mode" stored in the memory 60 according to a result detected by the fourth sensor and transmit the selected sound data to the sound output unit 70.

When the fourth sensor detects that the preheating of the heater 30 is started, the controller 20 may select the sound data stored in the memory 60 as the "preheating start mode" and transmits the selected sound data to the sound output unit 70. In contrast to this, when the fourth sensor detects that preheating of the heater 30 is completed, the controller 20 may select the sound data stored in the memory 60 as the "preheating completion mode" and output the selected sound data to the sound output unit 70.

In addition, when the third sensor detects that the cigarette 2 is accommodated, the controller 20 may control the heater 30 such that the preheating is started.

In addition, it is determined that the heater is heating according to a result detected by the fourth sensor and at the same time, it is determined that the cigarette 2 is separated from the accommodation portion 50 according to a result detected by the third sensor, the controller 20 may select the sound data stored in the memory 60 as a "heating-time cigarette separation mode during heating" and transmit the selected sound data to the sound output unit 70.

As described above, when it is determined that the cigarette 2 is separated during heating, the controller 20 may ensure safety by stopping the heating of the heater 30 or turning off the power to the aerosol generating device 1.

The fifth sensor may be a puff sensor that detects a user's puff. The fifth sensor may detect the user's puff based on an airflow path or various physical changes in an airflow channel. For example, the puff sensor 626 may detect the user's puff based on any one of a temperature change, a flow change, a voltage change, and a pressure change.

The fifth sensor may count the number of puffs. The number of puffs may be counted after heating of the heater 30 is started, preheating of the heater 30 is completed, or the heater 30 reaches a preset temperature.

When it is determined to be reached to the preset number of puffs based on the number of puffs detected by the fifth sensor, the controller 20 may select the sound data stored in the memory 60 as a "smoking end mode and transmit the selected sound data to the sound output unit 70.

The controller 20 determines whether the cigarette 2 is accommodated in or separated from the accommodation portion 50 of the aerosol generating device 1, select the sound data stored in the memory 60 according to the determined result, and transmit the selected sound data to the sound output unit 70.

Also, the sound output unit 70 of the aerosol generating device 1 may further include a volume controller. When the volume controller is further included, the housing 100 of the aerosol generating device 1 may include a volume control lever, a button, or so on that allows a user to adjust the volume.

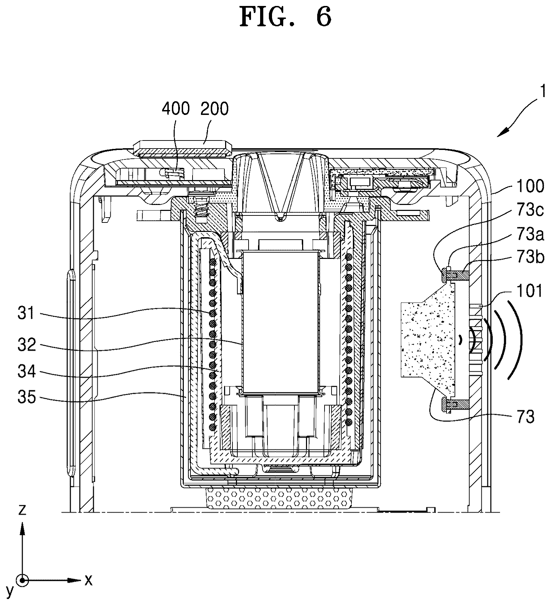

FIG. 6 is a cross-sectional view schematically illustrating an embodiment in which a speaker 73 is provided in an aerosol generating device 1.

The speaker 73 may be between a housing 100 and a heater 30 of the aerosol generating device 1. Specifically, the speaker 73 may be between the housing 100 and the heater 30 based on a direction crossing a longitudinal direction (a z-axis direction) of the aerosol generating device 1. Referring to FIG. 6, the speaker 73 may be between the housing 100 and the heater 30 based on the x-axis direction.

The heater 30 may include an insulating member such that heat for heating the cigarette 2 is better transmitted to the cigarette 2 without affecting other external components. The insulation member may be on an external side of the heater 30, that is, on a side of the heater facing the housing 100 which is opposite to a side facing the cigarette 2. The insulation member may surround the heater 30 and may have a cylindrical shape extending in the longitudinal direction (the z-axis direction). The speaker 73 may be between the housing 100 and a heat insulating member provided on the external side of the heater 30.

FIG. 6 illustrates a cross-sectional view of an example in which the cigarette 2 is heated by an induction heating method. When the cigarette 2 is inserted into the aerosol generating device 1, a magnetic field may be formed as power is supplied to a coil 31, and a susceptor 32 generates heat by the magnetic field, thereby heating the cigarette 2.

A first insulator 34 may be provided outside the susceptor 32. The first insulator 34 may block the heat generated in the susceptor 32 from being transferred to the outside and also allow more heat to be transferred to the cigarette 2. The first insulator 34 may provide the heat insulating effect described above and may also serve as a supporter for supporting the coil 31.

Also, a second insulator 35 may be further provided outside the coil 31. The second insulator 35 may serve to reinforce the heat insulating effect of the first insulator 34.

Also, the second insulator 35 may include a shield tape. By providing the shield tape, when a magnetic field formed by the coil 31 causes the susceptor 32 to generate heat to heat the cigarette 2, other components are not affected by the magnetic field. By providing the shield tape on an external side of the coil 31, that is, on a side facing the housing 100, which is opposite to a side facing the cigarette 2, the magnetic field does not affect other components, such as the speaker 73 and so on. In another example, the shield tape may also be provided between the first insulator 34 and the second insulator 35.

Referring to FIG. 6, the speaker 73 may be provided in a space between the housing 100 and the second insulator 35 of the aerosol generating device 1. By providing the speaker 73 in a space between the housing 100 and the second insulator 35, a resonance effect of the speaker 73 may be increased even in the aerosol generating device 1 that is reduced in size. However, an arrangement position of the speaker 73 is not limited to the position illustrated in FIG. 6.

In addition, the speaker 73 may be provided between the housing 100 and the heater 30 based on a direction crossing a longitudinal direction of the aerosol generating device 1 and may be above the heater 30 based on the longitudinal direction of the aerosol generating device 1.

Specifically, when the cigarette 2 is accommodated in the accommodation portion 50, the heater 30 may have a length for heating only the tobacco rod 210 (illustrated in FIG. 2A) of the cigarette 2. That is, only the portion of the cigarette 2 which includes an aerosol generating material may be heated, and in this case, a length (in the z-axis direction) of the heater 30 may be less than the length illustrated in FIG. 6.

As illustrated in FIG. 1A, when the cigarette 2 is accommodated in the accommodation portion 50 of the aerosol generating device 1 in a state where the heater 30 is inserted in the cigarette 2, the heater 30 may be shorter than the entire length (the z-axis direction) of the cigarette 2. As illustrated in FIGS. 1B and 1C, even when the heater 30 surrounds an external side of the cigarette 2, the heater 30 may be shorter than the entire length (the z-axis direction) of the cigarette 2. Also, as illustrated in FIG. 1D, the coil 31 and the susceptor 32 may also be shorter than the entire length (the z-axis direction) of the cigarette 2.

That is, a member for heating the cigarette 2 may have a length that is shorter than the length illustrated in FIG. 6.

In this case, the speaker 73 may be between the heater 30 and the housing 100 in order to reduce the influence from the heater 30, and at the same time, the speaker 73 may be above the heater 30 (in the +z direction based on the z axis). In this case, the speaker 73 may reduce the influence from the heater 30 and increase a resonance effect.

That is, when the cigarette 2 is accommodated in the accommodation portion 50, the heater 30 may be in a position parallel to the tobacco rod 210 (illustrated in FIG. 2A) of the cigarette 2, and the speaker 73 may be in a position parallel to the filter rod 220 (illustrated in FIG. 2A) of the cigarette 2, based on a longitudinal direction (the z-axis direction) of the aerosol generating device 1.

The speaker 73 may have a speaker frame 73a for being fixed to the aerosol generating device 1. A part of the speaker frame 73a may be fitted into a fixing member 73b and fixed by a fixing screw 73c. The fixing member 73b may be attached to the housing 100 of the aerosol generating device 1 or may extend integrally from the housing 100. However, the member for fixing the speaker 73 is not limited to the example described above.

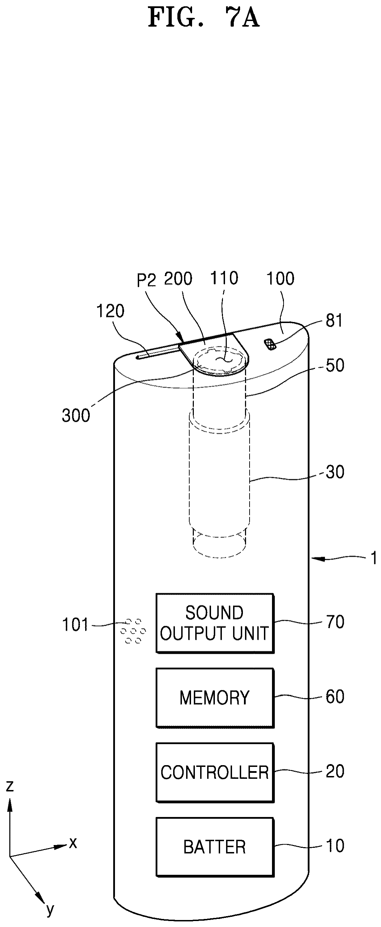

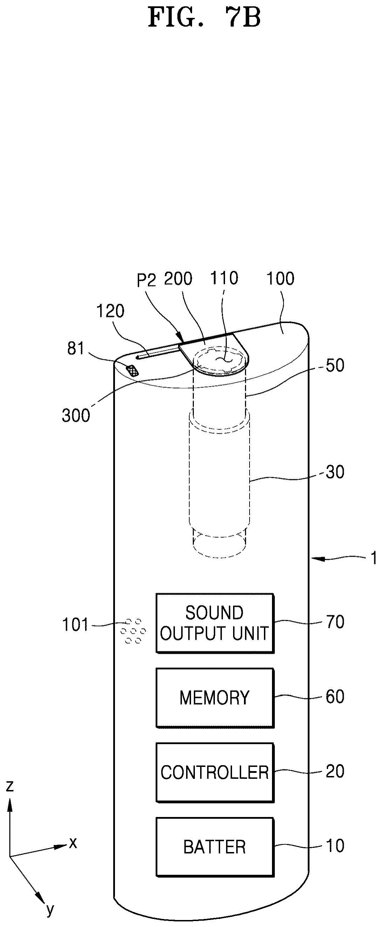

FIGS. 7A and 7B are perspective views schematically illustrating embodiments in which a microphone 81 is provided in an aerosol generating device 1.

The aerosol generating device 1 may further include the microphone 81 for receiving an external sound. The microphone 81 may record various sounds and record a user's voice.

A sound input hole for receiving an external sound may be formed in a surface of the aerosol generating device 1. When an external sound is input through the sound input hole, the microphone 81 may receive the external sound through the sound input hole. a diaphragm of the microphone 81 may be inside the aerosol generating device 1 to correspond to a position of the sound input hole.

Although briefly illustrated in FIGS. 7A and 7B, an arrangement of the microphone 81 may include both an arrangement of the sound input hole and an arrangement of the microphone 81 for receiving a sound transferred through the sound input hole.

In order for a user to inhale the cigarette 2, a mouth of the user may be often placed on an upper side (in the +z direction based on the z axis) of the aerosol generating device 1, and accordingly, the microphone 81 may be placed to be close to the upper side of the aerosol generating device 1 such that the user's voice may be recorded more clearly. Also, when the microphone 81 is placed at the position, an amplitude, frequency, waveform, and so on of a sound wave generated by the elastic member 400 may be more clearly recognized as the cover 200 opens or closes the hole 110.

Referring to FIG. 7A, the microphone 81 may be placed at a position (in the +x direction based on the x axis), in which the cover 200 does not move, on an upper surface of the aerosol generating device 1. The microphone 81 may not be affected by the movement of the cover 200.

Referring to FIG. 7B, the microphone 81 may be placed at a position (in the -x direction based on the x axis), in which the cover 200 does not move, on an upper surface of the aerosol generating device 1. Even when the cover 200 is at the first position P1 (illustrated in FIG. 3A) where the hole 110 is completely opened, the cover 200 may be at a position that does not cover the microphone 81.

In another example, the microphone 81 may be on a side or back of the aerosol generating device 1. An arrangement position of the microphone 81 is not limited to the position described above.

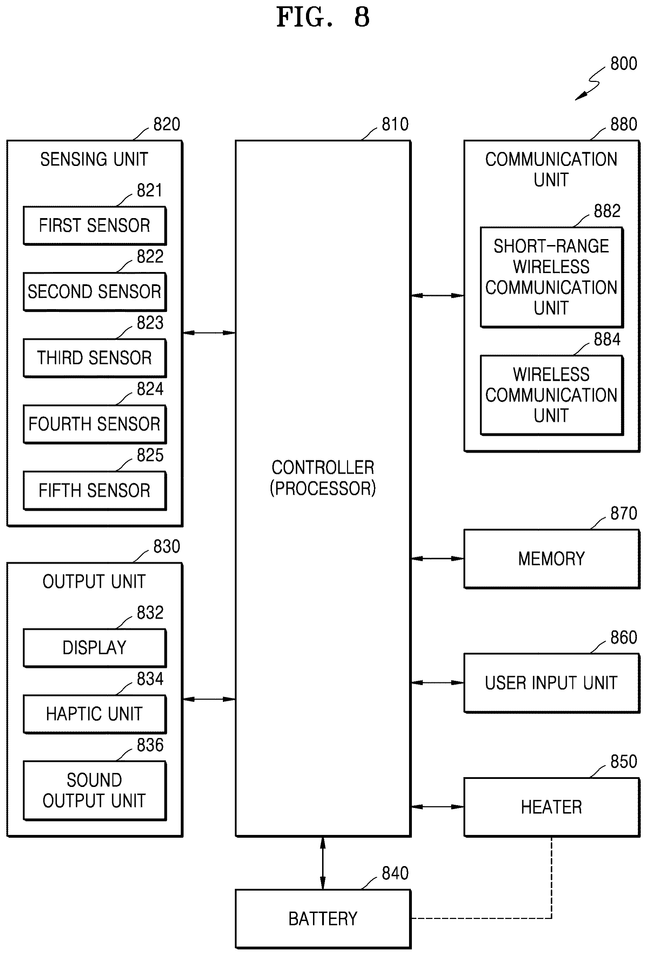

FIG. 8 is a block diagram of an aerosol generating device 800 according to another embodiment.

The aerosol generating device 800 may include a controller 810, a sensing unit 820, an output unit 830, a battery 840, a heater 850, a user input unit 860, a memory 870, and a communication unit 880. However, the internal structure of the aerosol generating device 800 is not limited to those illustrated in FIG. 8. That is, according to the design of the aerosol generating device 800, it will be understood by one of ordinary skill in the art that some of the components shown in FIG. 8 may be omitted or new components may be added.

The sensing unit 820 may sense a state of the aerosol generating device 800 and a state around the aerosol generating device 800, and transmit sensed information to the controller 810. Based on the sensed information, the controller 810 may control the aerosol generating device 800 to perform various functions, such as controlling an operation of the heater 850, limiting smoking, determining whether an aerosol generating article (e.g., a cigarette, a cartridge, or the like) is inserted, displaying a notification, or the like.

The sensing unit 820 may include at least one of a first sensor 821, a second sensor 822, a third sensor 823, a fourth sensor 824, and a fifth sensor 825 but is not limited thereto.

In addition to the sensors 821 to 825 described above, the sensing unit 820 may include, in addition to the temperature sensor 822, the insertion detection sensor 824, and the puff sensor 826 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 830 may output information on a state of the aerosol generating device 800 and provide the information to a user. The output unit 830 may include at least one of a display unit 832, a haptic unit 834, and a sound output unit 836, but is not limited thereto. When the display unit 832 and a touch pad form a layered structure to form a touch screen, the display unit 832 may also be used as an input device in addition to an output device.

The display unit 832 may visually provide information about the aerosol generating device 800 to the user. For example, information about the aerosol generating device 800 may mean various pieces of information, such as a charging/discharging state of the battery 840 of the aerosol generating device 800, a preheating state of the heater 850, an insertion/removal state of an aerosol generating article, or a state in which the use of the aerosol generating device 800 is restricted (e.g., sensing of an abnormal object), or the like, and the display unit 832 may output the information to the outside. The display unit 832 may be, for example, a liquid crystal display panel (LCD), an organic light-emitting diode (OLED) display panel, or the like. In addition, the display unit 832 may be in the form of a light-emitting diode (LED) light-emitting device.

The haptic unit 834 may tactilely provide information about the aerosol generating device 800 to the user by converting an electrical signal into a mechanical stimulus or an electrical stimulus. For example, the haptic unit 834 may include a motor, a piezoelectric element, or an electrical stimulation device.

The sound output unit 836 may correspond to the sound output unit 70 described above with reference to FIGS. 3 and 5. The sound output unit 836 may audibly provide information about the aerosol generating device 800 to the user. For example, the sound output unit 836 may convert an electrical signal into a sound signal and output the same to the outside.

The battery 840 may supply power used to operate the aerosol generating device 800. The battery 840 may supply power such that the heater 850 may be heated. In addition, the battery 840 may supply power required for operations of other components (e.g., the sensing unit 820, the output unit 830, the user input unit 860, the memory 870, and the communication unit 880) in the aerosol generating device 800. The battery 840 may be a rechargeable battery or a disposable battery. For example, the battery 840 may be a lithium polymer (LiPoly) battery, but is not limited thereto.

The heater 850 may receive power from the battery 840 to heat an aerosol generating material. Although not illustrated in FIG. 8, the aerosol generating device 800 may further include a power conversion circuit (e.g., a direct current (DC)/DC converter) that converts power of the battery 840 and supplies the same to the heater 850. In addition, when the aerosol generating device 800 generates aerosols in an induction heating method, the aerosol generating device 800 may further include a DC/alternating current (AC) converter that converts DC power of the battery 840 into AC power.

The controller 810, the sensing unit 820, the output unit 830, the user input unit 860, the memory 870, and the communication unit 880 may each receive power from the battery 840 to perform a function. Although not illustrated in FIG. 8, the aerosol generating device 800 may further include a power conversion circuit that converts power of the battery 840 to supply the power to respective components, for example, a low dropout (LDO) circuit, or a voltage regulator circuit.

In an embodiment, the heater 850 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 850 may be implemented by a metal wire, a metal plate on which an electrically conductive track is arranged, a ceramic heating element, or the like, but is not limited thereto.

In another embodiment, the heater 850 may be a heater of an induction heating type. For example, the heater 850 may include a susceptor that heats an aerosol generating material by generating heat through a magnetic field applied by a coil.

The user input unit 860 may receive information input from the user or may output information to the user. For example, the user input unit 860 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 8, the aerosol generating device 800 may further include a connection interface, such as a universal serial bus (USB) interface, and may connect to other external devices through the connection interface, such as the USB interface, to transmit and receive information, or to charge the battery 840.

The memory 870 may correspond to the memory 60 described above with reference to FIGS. 3 and 5. The memory 870 may store various types of sound data. The memory 870 is a hardware component that stores various types of data processed in the aerosol generating device 800, and may store data processed and data to be processed by the controller 810. The memory 870 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 870 may store an operation time of the aerosol generating device 800, the maximum number of puffs, the current number of puffs, at least one temperature profile, data on a user's smoking pattern, etc.

The communication unit 880 may include at least one component for communication with another electronic device. For example, the communication unit 880 may include a short-range wireless communication unit 882 and a wireless communication unit 884.

The short-range wireless communication unit 882 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 884 may include a cellular network communication unit, an Internet communication unit, a computer network (e.g., local area network (LAN) or wide area network (WAN)) communication unit, or the like, but is not limited thereto. The wireless communication unit 884 may also identify and authenticate the aerosol generating device 800 within a communication network by using subscriber information (e.g., International Mobile Subscriber Identifier (IMSI)).

The controller 810 may control general operations of the aerosol generating device 800. In an embodiment, the controller 810 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 810 may control the temperature of the heater 850 by controlling supply of power of the battery 840 to the heater 850. For example, the controller 810 may control power supply by controlling switching of a switching element between the battery 840 and the heater 850. In another example, a direct heating circuit may also control power supply to the heater 850 according to a control command of the controller 810.

The controller 810 may analyze a result sensed by the sensing unit 820 and control subsequent processes to be performed. For example, the controller 810 may control power supplied to the heater 850 to start or end an operation of the heater 850 on the basis of a result sensed by the sensing unit 820. As another example, the controller 810 may control, based on a result sensed by the sensing unit 820, an amount of power supplied to the heater 850 and the time the power is supplied, such that the heater 850 may be heated to a certain temperature or maintained at an appropriate temperature.

The controller 810 may control the output unit 830 based on a result detected by the sensing unit 820. According to the detected result, the controller 810 may inform a user of information through at least one of the display unit 832, the haptic unit 834, and the sound output unit 836.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

## Claims

1. An aerosol generating device comprising:
a housing forming an external shape of the aerosol generating device and having a sound emission hole;
an accommodation portion configured to accommodate a cigarette through a hole formed on one side of the housing;
a heater configured to heat the cigarette accommodated in the accommodation portion;
a memory storing sound data;
a sound output unit configured to output the sound data; and
a controller configured to transmit the sound data stored in the memory to the sound output unit.

2. The aerosol generating device of claim 1, further comprising:
a cover configured to cover at least a part of the housing and open or close the hole; and
a first sensor configured to detect whether the hole is opened or closed by the cover,
wherein the controller selects sound data of an open mode or closed mode, stored in the memory, according to a result detected by the first sensor and transmits the selected sound data to the sound output unit.

3. The aerosol generating device of claim 2, wherein the cover is movably coupled to one side of the housing, opens the hole at a first position, and closes the hole at a second position opposite to the first position.

4. The aerosol generating device of claim 3, wherein the first sensor detects that the hole is opened when the cover is closer to the first position than to the second position, and detects that the hole is closed when the cover is closer to the second position than to the first position.

5. The aerosol generating device of claim 4, further comprising an elastic member having one side rotatably connected to the cover and the other side rotatably connected to the housing and configured to provide an elastic force to the cover.

6. The aerosol generating device of claim 5, wherein
the first sensor detects at least one of an amplitude, a frequency, and a waveform of a sound wave generated by the elastic member as the cover opens or closes the hole, and
the controller determines whether the hole is opened or closed by determining whether the at least one detected by the first sensor matches at least one of an amplitude, a frequency, and a waveform of the elastic member, which are previously stored.

7. The aerosol generating device of claim 1, wherein the sound output unit includes an amplifier configured to amplify a signal of the sound data and a speaker configured to output a signal amplified by the amplifier.

8. The aerosol generating device of claim 7, wherein the sound output unit further includes a decoder connected to the memory and configured to decode the sound data stored in the memory.

9. The aerosol generating device of claim 7, wherein the speaker is arranged between the housing and the heater, based on a direction crossing a longitudinal direction of the aerosol generating device.

10. The aerosol generating device of claim 1, further comprising a sound input unit including a microphone receiving an external sound and an encoder configured to encode a sound input through the microphone.

11. The aerosol generating device of claim 1, further comprising:
a communication module,
wherein the controller receives a sound signal through the communication module and transmits the sound signal to the sound output unit.

12. The aerosol generating device of claim 1, further comprising:
a second sensor configured to detect whether power of the aerosol generating device is turned on or off,
wherein the controller selects sound data of an on mode or an off mode, stored in the memory, according to a result detected by the second sensor and transmits the sound data that is selected to the sound output unit.

13. The aerosol generating device of claim 1, further comprising:
a third sensor configured to detect whether the cigarette is accommodated,
wherein the controller selects sound data of a cigarette accommodation mode or a cigarette separation mode, stored in the memory, according to a result detected by the third sensor and transmits the sound data that is selected to the sound output unit.

14. The aerosol generating device of claim 1, further comprising:
a fourth sensor configured to detect a temperature of the heater,
wherein the controller selects sound data of a preheating start mode or preheating completion mode, stored in the memory, according to a result detected by the fourth sensor and transmits the sound data that is selected to the sound output unit.

15. The aerosol generating device of claim 1, further comprising:
a third sensor configured to detect whether the cigarette is accommodated; and
a fourth sensor configured to detect a temperature of the heater,
wherein, when the fourth sensor detect that the heater is heating and at the same time, when the third sensor detects that the cigarette is separated from the accommodation portion, the controller transmits sound data stored in the memory as a heating-time cigarette separation mode to the sound output unit.

16. **17.** The aerosol generating device of claim 1, further comprising:
a fifth sensor configured to count a number of puffs of a user,
wherein, when the number of puffs counted by the fifth sensor is determined to reach a preset number of puffs, the controller transmits sound data stored in the memory as a smoking end mode to the sound output unit.
